# FASCICULE DE BREVET EUROPEEN

(11) **EP 0 700 352 B1**
(45) Date de publication et mention de la délivrance du brevet: **26.11.1997**
(21) Numéro de dépôt: 95912995.8
(22) Date de dépôt: 30.03.1995
(51) Int. Cl.: B65D 5/66

(54) **BOITE D'EMBALLAGE REUTILISABLE**
WIEDERVERWENDBARE VERPACKUNGSSCHACHTEL
REUSABLE PACKING CARTON

(30) Priorité: 31.03.1994 CH 972/94
(43) Date de publication de la demande: 13.03.1996
(73) Titulaire: TRAMAPACK S.A., 1023 Crissier (CH)
(72) Inventeur: GUENIOT, Gérard, CH-1175 Lavigny (CH)
(74) Mandataire: Hranitzky, Wilhelm Max
(86) Numéro de dépôt international: CH9500068
(87) Numéro de publication internationale: WO9526909

(56) Documents cités:
- DE-A- 3 602 632
- FR-A- 2 614 277
- US-A- 4 333 602

## Description

La présente invention concerne une boîte d'emballage réutilisable, en forme de parallélépipède rectangle, comportant quatre parois latérales réunies de façon que le pourtour latéral de la boîte soit fermé, ainsi qu'au moins deux parties de couvercle et au moins deux parties de fond, essentiellement rectangulaires, formant chacune une arête avec une paroi latérale respective et ayant un bord libre parallèle à cette arête.

De telles boîtes d'emballage sont généralement fabriquées en carton ondulé, et leurs fond et couvercle doivent être fermés par des bandes autocollantes ou des moyens similaires. Ces boîtes connues ne peuvent être réutilisées que d'une façon très limitée, leurs propriétés et leur présentation se détériorant rapidement du fait de la manière dont elles doivent être fermées.

La présente invention vise à remédier à cet inconvénient et à fournir une boîte d'emballage pouvant être fermée ou ouverte sans utilisation de moyens extérieurs et sans endommagement de la surface de la boîte. L'invention a également pour but de fournir une boîte robuste, à usage multiple, ayant des possibilités d'utilisation, de fabrication et de recyclage permettant une économie importante et contribuant à la préservation de l'environnement.

A cet effet, la boîte selon l'invention est caractérisée en ce que les bords libres des deux parties de couvercle et/ou de fond comportent chacun un profilé dont la section et l'agencement sont tels que ces bords libres peuvent être réunis par emboîtement de ces profilés l'un dans l'autre.

Une telle boîte peut être réalisée avantageusement en une matière plastique à partir d'une plaque obtenue par extrusion, les profilés faisant partie intégrante des bords à réunir. La boîte selon l'invention peut également être réalisée en un carton ondulé, lesdits profilés, réalisés en une matière plastique, étant fixés sur les bords à réunir.

Les revendications 4 à 8 décrivent différentes formes d'exécution particulières de la boîte d'emballage selon l'invention.

D'autres caractéristiques, les buts et les avantages de l'invention ressortiront plus clairement de la description suivante d'exemples de réalisation, indiqués à titre non limitatif et illustrés par le dessin annexé, dans lequel
la Fig. 1 est une vue en perspective, schématique, d'une boîte d'emballage selon l'invention;
la Fig. 2 est une vue en coupe des bords de deux parties de couvercle ou de fond;
la Fig. 3 est une vue en coupe d'une autre forme d'exécution de ces bords, et
la Fig. 4 est une vue en coupe d'une forme d'execution d'un profilé destiné à être fixé au bord de deux parties de couvercle ou de fond.

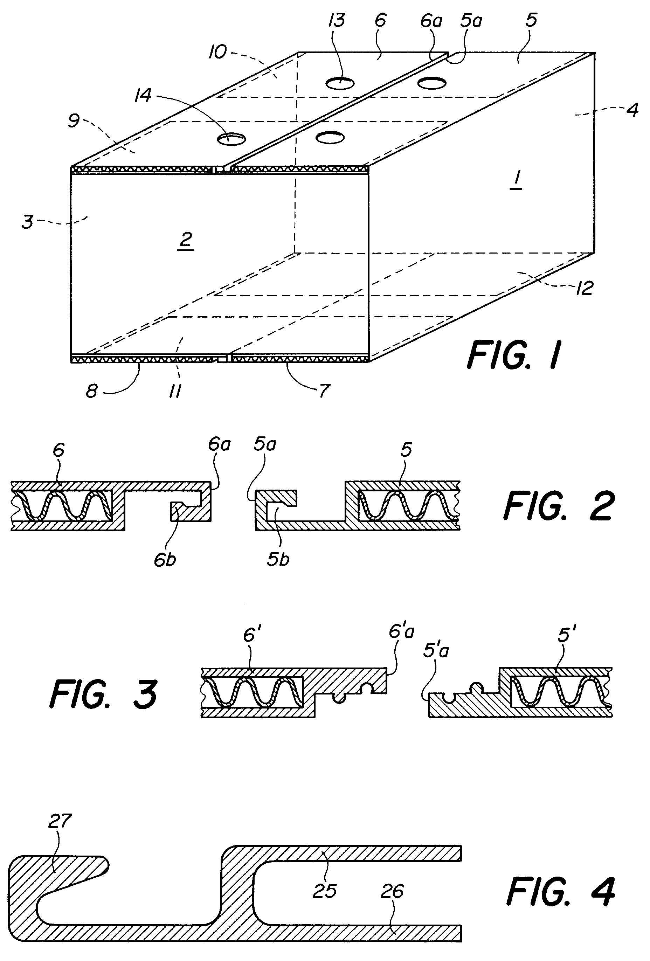

La boîte représentée schématiquement à la Fig. 1 est réalisée, par exemple, en une matière synthétique telle que le polypropylène ou le polyéthylène, à partir d'une plaque obtenue par extrusion et découpée de la manière usuelle. Ces plaques peuvent avoir, en section, une structure similaire à celle d'un carton ondulé, ou comporter des couches intérieures et extérieures en des matériaux différents.

La boîte de la Fig. 1 présente quatre parois latérales rectangulaires 1 à 4 réunies après pliage autour de leurs arêtes verticales, de façon à réaliser un pourtour fermé. Le couvercle et le fond de la boîte comportent deux parties respectives 5, 6 et 7, 8 qui seront fermées à l'extérieur, ainsi que deux parties intérieures rabattables dans le sens perpendiculaire à celui des parties 5 à 8, à savoir des parties 9 et 10 pour le couvercle, et 11 et 12 pour le fond de la boîte.

Les parties 5 et 6 présentent des bords libres 5a et 6a qui comportent des profilés respectifs, tels que montrés, par exemple, à la Fig. 2. Ces profilés font partie intégrante de la plaque utilisée pour la confection de la boîte qui peut avoir une structure similaire à celle d'un carton ondulé.

Les profilés formant les bords 5a et 6a peuvent avoir, en section transversale, une forme de crochet, telle que représentée à la Fig. 2. Cette configuration permet de réunir les deux bords par emboîtement des deux crochets l'un dans l'autre, la partie recourbée 6b venant, en l'occurrence, s'insérer dans la creusure 5b de la partie 5. Pour fermer la boîte, il suffit dès lors de rapprocher les bords 5a et 6a de façon à réaliser cet emboîtement, la flexibilité des parois latérales 1 et 3, auxquelles sont rattachées les parties 5 et 6, permettant, d'une part, ce rapprochement des bords libres et assurant, d'autre part, du fait de leur élasticité, que les profilés restent accrochés sous l'effet de forces tendant à écarter les bords 5a et 6a dans le plan du couvercle, perpendiculairement à leur direction longitudinale. En outre, les crochets peuvent avoir une forme permettant un encliquetage mutuel pour encore mieux assurer leur réunion, par exemple en cas de déformation de la boîte.

La Fig. 1 montre que les parties 5 et 6 peuvent être munies d'ouvertures, telles que 13, 14, destinées à faciliter leur rapprochement des parties 5 et 6 en y passant, par exemple, le pouce et l'index lors de la fermeture ou de l'ouverture de la boîte. D'autre part, il est à noter que les parties rabattables intérieures 9, 10 et 11, 12 sont légèrement plus courtes, dans le sens de leurs arêtes communes avec la paroi 2 ou 4, que ces parois latérales, le dégagement ainsi produit facilitant la flexion des parois 1 et 3 lors de la fermeture et de l'ouverture de la boîte.

Le fond de la boîte selon la Fig. 1 est réalisé d'une manière tout à fait analogue à ce qui vient d'être décrit pour le couvercle.

La Fig. 3 montre une autre configuration du profilé formant les bords libres 5'a et 6'a de parties de couvercle 5' et 6' et permettant un emboîtement d'un profilé dans l'autre. Cette forme est de préférence conçue pour réaliser un léger encliquetage de façon à assurer la réunion des bords non seulement dans le plan des parties 5' et 6', mais également dans une direction perpendiculaire à ce plan.

La Fig. 4 montre l'exemple d'un profilé destiné à être fixé, par exemple par soudure ou collage aux bords de deux parties de couvercle ou de fond de la boîte. Les parties 25, 26 servent à emboîter le profilé sur un tel bord, alors que la partie 27 permet l'accrochage du profilé correspondant, tourné de 180 °, du bord opposé, de façon similaire à l'accrochage des parties représentées à la Fig. 2.

Le principe de fermeture de la boîte selon l'invention permet de réutiliser la boîte de nombreuses fois avant qu'elle ne doive être détruite, par exemple par incinération, ou que, de préférence, sa matière soit recyclée pour fournir de nouveaux produits. Cette possibilité d'une utilisation multiple de la boîte permet de réaliser un concept selon lequel la boîte est au départ consignée à l'utilisateur et un remboursement est prévu lors de sa restitution. Elle permet également l'utilisation en circuit fermé à l'intérieur d'une ou de plusieurs entreprises, ce qui représente une importante économie pendant la durée de vie de la boîte. D'autre part, le montage de la boîte étant très rapide, on réalise un gain de temps non négligeable aux chaînes de production, ainsi qu'une économie par la suppression de bandes autocollantes qui évite aussi l'élimination des déchets correspondants.

La présente boîte peut être fabriquée en un carton ondulé de haute résistance, les profilés étant dans ce cas appliqués par collage ou par un autre moyen de fixation usuel.

Lorsque la boîte est réalisée à partir d'une plaque en matière plastique, on peut utiliser, comme matières premières pour la fabrication de cette plaque, des matières recyclées, et travailler en mono-extrusion ou en co-extrusion.

La plaque en matière plastique peut être alvéolaire ou pleine. Dans le cas d'une plaque pleine, le profilé peut être thermoformé en lisière. Selon une forme d'exécution, le profilé est fabriqué séparément et emboîté ou emboîté et soudé sur les bords à réunir.

L'ensemble des propriétés et possibilités mentionnées ci-dessus fournissent une contribution importante à la réduction de la quantité de déchets et ainsi à la protection de l'environnement, tout en fournissant un moyen d'emballage robuste, économique et extrêmement pratique dans son utilisation.

## Revendications

1. Boîte d'emballage réutilisable, en forme de parallélépipède rectangle, comportant quatre parois latérales (1 à 4) réunies de façon que le pourtour latéral de la boîte soit fermé, ainsi qu'au moins deux parties de couvercle (5, 6) et au moins deux parties de fond (7, 8), essentiellement rectangulaires, formant chacune une arête avec une paroi latérale respective (1, 3) et ayant un bord libre (5a, 6a) parallèle à cette arête, caractérisée en ce que lesdits bords libres (5a, 6a) des deux parties de couvercle et/ou de fond comportent, chacun, un profilé dont la section et l'agencement sont tels que ces bords libres peuvent être réunis par emboîtement de ces profilés l'un dans l'autre.

2. Boîte selon la revendication 1, réalisée en une matière plastique à partir d'une plaque obtenue par extrusion dans le sens desdits bords libres, caractérisée en ce que lesdits profilés font partie intégrante de ces bords.

3. Boîte selon la revendication 1, réalisée en carton ondulé, caractérisée en ce que lesdits profilés sont fabriqués séparément et fixés sur les bords à réunir.

4. Boîte selon l'une des revendications 2 ou 3, caractérisée en ce que la section transversale desdits profilés présente une forme de crochet.

5. Boîte selon les revendications 3 et 4, caractérisée en ce que la section transversale desdits profilés présente une partie agencée pour s'emboîter sur un bord d'une partie de couvercle ou de fond.

6. Boîte selon l'une des revendications 2 ou 3, caractérisée en ce que la section transversale desdits profilés présente des protubérances et des creusures complémentaires permettant de réaliser un encliquetage.

7. Boîte selon l'une des revendications précédentes, dans laquelle le couvercle et le fond comprennent deux parties rabattables intérieures (9, 10; 11, 12) formant une arête perpendiculaire à la direction desdits bords libres avec des parois latérales respectives (2, 4), caractérisée en ce que ces parties intérieures sont plus courtes, dans le sens de ladite arête, que la paroi latérale avec laquelle elles forment cette arête.

8. Boîte selon l'une des revendications précédentes, caractérisée en ce que les deux parties de couvercle et de fond comportant lesdits profilés, présentent chacune deux trous (13, 14) découpés, les trous de deux parties différentes étant alignés dans le sens perpendiculaire auxdits profilés et ayant chacun une grandeur permettant le passage d'un doigt.

## Claims

1. A reusable packaging box, in the form of a rectangular parallelepiped, having four lateral walls (1 to 4) joined together in such as manner that the lateral periphery of the box is closed, as well as at least two cover parts (5, 6) and at least two bottom parts (7, 8) being substantially rectangular, forming each one an edge with a respective lateral wall (1, 3) and having a free border (5a, 6a) parallel to said edge, characterized in that said free borders (5a, 6a) of said two cover and/or bottom parts comprise each one a profile part, the cross-section and the construction of which are such that said free borders can be joined together by mutual engagement of said profiles.

2. A box according to claim 1, made of plastic material from a plate obtained by extrusion in the direction of said free borders, characterized in that said profile parts are integral with said borders.

3. A box according to claim 1, made of corrugated cardboard, characterized in that said profile parts are made separately and fastened to the borders to be joined together.

4. A box according to one of the claims 2 or 3, characterized in that the cross-section of said profile parts is hook-shaped.

5. A box according to claims 3 and 4, characterized in that the cross-section of said profile parts has a portion arranged for engaging onto a border of a cover or bottom part.

6. A box according to one of the claims 2 or 3, characterized in that the cross-section of said profile parts has matching protrusions and recesses making possible a clip-type engagement thereof.

7. A box according to one of the preceding claims, in which the cover and the bottom include two inner down-foldable parts (9, 10; 11, 12) forming an edge with the respective lateral walls (2, 4), characterized in that said inner parts are shorter, in the direction of said edge, than the lateral wall with which they form said edge.

8. A box according to one of the preceding claims, characterized in that said two cover and bottom parts comprising said profile parts have each cut-out holes (13, 14), the holes of two different parts being aligned in a direction perpendicular to said profile parts and having each a size allowing the passage of a finger.

## Patentansprüche

1. Wiederverwendbare Verpackungsschachtel in Form eines rechtwinkeligen Parallelepipeds, welche vier Seitenwände (1 bis 4) aufweist, die so vereinigt sind, dass der seitliche Umfang der Schachtel geschlossen ist, sowie mindestens zwei Deckelteile (5, 6) und zumindest zwei Bodenteile (7, 8) aufweist, die im wesentlichen rechtwinkelig sind und jeweils eine Kante mit einer entsprechenden Seitenwand (1, 3) bilden, und einen freien Rand (5a, 6a) parallel zu dieser Kante besitzen, dadurch gekennzeichnet, dass die genannten freien Ränder (5a, 6a) der beiden Deckel und/oder Bodenteile jeweils ein Profilstück aufweisen, dessen Querschnitt und Ausbildung derart sind, dass diese freien Ränder durch Ineinandergreifen dieser Profilstücke vereinigt werden können.

2. Schachtel gemäss Patentanspruch 1, hergestellt aus einem Plastikmaterial ausgehend von einer durch Extrusion in der Richtung der genannten freien Ränder erhaltenen Platte, dadurch gekennzeichnet, dass die genannten Profilstücke mit diesen Rändern ein Teil bilden.

3. Schachtel gemäss Patentanspruch 1, hergestellt aus Wellkarton, dadurch gekennzeichnet, dass die genannten Profilstücke getrennt hergestellt und auf den zu vereinigenden Rändern befestigt werden.

4. Schachtel gemäss einem der Patentansprüche 2 oder 3, dadurch gekennzeichnet, dass der Querschnitt der genannten Profilstücke hakenförmig ist.

5. Schachtel gemäss den Patentansprüchen 3 und 4, dadurch gekennzeichnet, dass der Querschnitt der genannten Profilstücke einen Teil aufweist, der so ausgebildet ist, dass er auf einem Rand eines Deckel- oder Bodenteils zum Eingriff kommt.

6. Schachtel gemäss einem der Patentansprüche 2 oder 3, dadurch gekennzeichnet, dass der Querschnitt der genannten Profilstücke Erhebungen und komplementäre Vertiefungen aufweist, die eine Schnappverbindung herzustellen erlauben.

7. Schachtel gemäss einem der vorhergehenden Patentansprüche, bei der der Deckel und der Boden zwei innere, umklappbare Teile (9, 10; 11, 12) besitzen, die mit entsprechenden Seitenwänden (2, 4) eine senkrecht zur Richtung der genannten freien Ränder verlaufende Kante bilden, dadurch gekennzeichnet, dass diese inneren Teile in der Richtung der genannten Kante kürzer sind als die Seitenwand, mit der sie diese Kante bilden.

8. Schachtel gemäss einem der vorhergehenden Patentansprüche, dadurch gekennzeichnet, dass die beiden Deckel- und Bodenteile, welche die genannten Profilstücke aufweisen, jeweils zwei ausgeschnittene Löcher (13, 14) besitzen, wobei die Löcher zweier verschiedener Teile in der Richtung senkrecht zu diesen Profilstücken ausgerichtet sind und jeweils eine Grösse haben, die das Durchgreifen eines Fingers erlaubt.
